# EUROPEAN PATENT SPECIFICATION

(11) **EP 3 124 674 B1**
(45) Date of publication and mention of the grant of the patent: **24.04.2019**
(21) Application number: 14887169.2
(22) Date of filing: 12.06.2014
(51) Int. Cl.: D06F 39/10

(54) **FILTER APPARATUS FOR RECYCLING WATER OF A WASHING MACHINE HAVING SELF-CLEANING FUNCTION AND WASHING MACHINE**
FILTERVORRICHTUNG ZUM RECYCLING VON WASSER EINER WASCHMASCHINE MIT SELBSTREINIGUNGSFUNKTION UND WASCHMASCHINE
APPAREIL DE FILTRATION POUR LE RECYCLAGE DE L'EAU D'UNE MACHINE À LAVER AYANT UNE FONCTION D'AUTO-NETTOYAGE ET MACHINE À LAVER

(30) Priority: 27.03.2014 CN 201410119658; 27.03.2014 CN 201410119225
(43) Date of publication of application: 01.02.2017
(73) Proprietor: Haier Group Corporation, Qingdao, Shandong 266101 (CN); Qingdao Haier Washing Machine Co., Ltd., Qingdao, Shandong 266101 (CN)
(72) Inventor: LV, Yanfen, Qingdao Shandong 266101 (CN); DENG, Jinzhu, Qingdao Shandong 266101 (CN); LI, Haitao, Qingdao Shandong 266101 (CN); PENG, Xiuwen, Qingdao Shandong 266101 (CN)
(74) Representative: Pfenning, Meinig & Partner mbB
(86) International application number: PCT/CN2014/079774
(87) International publication number: WO 2015/143784

(56) References cited:
- WO-A2-2004/090219
- CN-A- 101 545 192
- CN-A- 101 545 192
- CN-A- 101 545 194
- KR-U- 20090 002 072
- US-B1- 6 402 962

## Description

### Technical Field

The present invention relates to a treatment device for recycling water of a washing machine, specifically to a water-saving device adopting a flocculation filter way of the washing machine, in particular to a filter apparatus for recycling water of the washing machine with self-cleaning function and the washing machine.

### Technical Background

With the improvement of people's living standard, washing machines have already become one of main household appliances in people's daily life; a washing process of the washing machine mainly includes a washing phase, a rinsing phase and a spin-dry phase; in the washing phase, water entering into the washing machines and detergents are used to wash clothes; in the rinsing phase, in order to rinse out stains and remaining detergents, more water is required or multiple times for rinsing are performed to rinse out the clothes, thereby consuming a great amount of water resources; and even for a water-saving drum washing machine, the clothes are needed to be rinsed for at least twice for the purpose of rinsing out the clothes, at least 30L of tap water is consumed in this process. When there are fewer stains on the clothes or fewer detergents are used, the clothes can be cleaned by means of twice rinsing, but if a user selects a three-time rinsing mode, the water resources are certainly wasted; for example, the basic water consumption for twice rinsing of a 6kg full-automatic washing machine is generally about 100L. How to save water and electric power during cleaning the clothes simultaneously is always one of the focuses concerned by consumers.

So far, there is no water purifying and circulating device used with a household washing machine. Even for a so-called washing machine with water-saving function, a water storage tank is generally installed at a side position of the washing machine, a water pump is used to inject and discharge the water, and three times of rinsing can be performed, with the water injected at one time, thereby realizing the water-saving function. However, the post-washing water cannot be stored, meanwhile, the washing machine is complex in structure, large in size and inconvenient for transportation and recycle. Due to limitations on the aspects such as the volume, the structure, the flexibility and the like, original functions of the washing machine are affected and the function of a water-saving tank itself cannot be sufficiently played. In order to better save the water resources, on the basis of an existing washing way, many manufacturers have done a great number of researches and developments.

The existing washing machine has a water circulating function, which only plays a role in filtering line lint, homogenizing the washing or sterilizing by adding ozone or heavy metal ions. The water consumption cannot be improved, and the cleanliness of the clothes is not fundamentally improved.

For the circulating of the wash water, by referring to relevant patent documents, such as, a patent with an application No.200810072420.5 entitled "washing machine water circulating and saving device", the wash water is input into a water drum to be purified. This invention directly discharges the first-time wash water without purifying the first-time wash water, and the second-time and the third-time rinsing water is purified to be used for the next washing.

In the above art, "the water circulating technology" is to utilize the rinsing water after being purified and cannot circularly utilize the first-time wash water (primary wash water) ; and the purified water is remained for use in the next washing and cannot be currently used for washing the clothes.

A Chinese patent with an application No.03256181.4 discloses a water-saving washing machine, wherein a primary filter apparatus is arranged in front of a water outlet of a washing drum; and the water-saving washing machine is also provided with a water storage drum, a flocculation pool is arranged on the bottom of the water storage drum, a filter apparatus is arranged above the flocculation pool, the flocculation pool is communicated with the washing drum through a pipeline, the flocculation pool is also provided with a sewage drain outlet, and the pipeline is provided with a pump.

Since the filter apparatus of the above structure has no washing function, after being used for a long time, the filter apparatus can be blocked, thereby influencing the water circulating treatment.

An example of prior art is described in CN 101545192 A, which discloses a solvent purification apparatus capable of excellently removing pollutant at rotation central portion of the rotary disk type filter during rotary disk type regenerator, and a solvent filtering apparatus. In a first filter apparatus, the rotary disk type filter intermittently rotates under the state that solvent is stored in a container within a predetermined amount. The situation that the solvent in the container is separated from the rotation central portion of the rotary disk type filter and space is formed in the portion. Consequently, when the rotary disk is regenerated, because the rotation central portion of the rotary disk type filter can be made hit the liquid level of the solvent in the container, pollutant at the rotary central portion of the rotary disk type filter can be excellently removed.

In view of this, the present invention is provided.

### Summary

The present invention aims at solving the technical problem of overcoming the weaknesses of the existing art and providing a filter apparatus for recycling water of a washing machine with a simple structure and a self-cleaning function.

Another object of the present invention is to provide a washing machine with the filter apparatus for recycling water..

In order to solve the above technical problems, a basic concept of the technical solution adopted by the present invention is as follows: a filter apparatus for recycling water of a washing machine with a self-cleaning function includes a filter container and a filter mechanism rotatably arranged inside the filter container, characterized in that the filter apparatus further includes a self-cleaning mechanism utilizing an inlet water flow to drive the filter mechanism to rotate and to spray and wash the filter mechanism; the filter mechanism includes a cylindrical filter frame and a filter screen arranged on the filter frame, two ends of the filter frame are pivotally connected with the filter container, one end of the filter frame is a rotary connector, and the other end of the filter frame is axially sealed; the filter container is provided with a circulating water inlet, a water outlet for discharging the filtered water and a sewage drain outlet for discharging the washing waste water, and the water outlet is communicated with the rotary connector of the filter mechanism; wherein the self-cleaning mechanism comprises a spray head installed on the filter container, a spray direction of sprayed water of the spray head acts on a surface of the filter screen of the filter mechanism to drive the filter mechanism to rotate, wherein the spray direction of the spray head is configured to deviate from the axis of the filter mechanism and tilt to a rotation circumferential surface of the filter mechanism to be close to a direction tangential with the filter frame.

Further, an inclination angle α is formed between an the axial rotation direction of the filter mechanism and a horizontal plane, the inclination angle α satisfies with 0≤α≤30°; the rotary connector is arranged at a relatively lower end of the filter mechanism; and by obliquely or transversely installing the filter mechanism, not only the filter area can be increased and the filter speed can be increased, but also the washing of the filter screen is facilitated.

Or the filter mechanism is vertically arranged inside the filter container, and the rotary connector is arranged at a bottom end. The structure effectively utilizes the scouring speed of the water flow on the filter screen, so the filter screen is better cleaned.

Further, the spray direction of the spray head deviates from the axis of the filter mechanism and tilts to a rotation circumferential surface of the filter mechanism to be close to a direction tangential with the cylindrical filter frame, and the sprayed water acts on the surface of the filter screen of the filter mechanism, thereby realizing powerful washing.

Further, the self-cleaning mechanism further includes a paddle arranged on the surface of the filter mechanism, the paddle is arranged correspondingly to the spray direction of the spray head so as to transfer a driving force for driving the rotation of the filter mechanism by the water flow, and the water flow in the filter container is stirred to scour an inner wall of the filter container.

Further, the spray head has a tubular structure, one end of the spray head is closed, the other end of the spray head is communicated with inlet water for washing, and at least one water spray opening is formed in the peripheral wall of the spray head along an axial direction. The water spray opening has a circular shape, an elliptic shape or a strip shape, and the length of the spray head needs to ensure that the width of the sprayed water flow is sufficient to cover the axial length range of the whole filter screen.

Further, the spray head includes a nozzle and a water inlet pipe, the nozzle is provided with a pressure equalizing water cavity and water spray openings which are communicated with the pressure equalizing water cavity and spray out the water, the water inlet pipe is extended into the pressure equalizing water cavity, one end of the water inlet pipe extending into the pressure equalizing water cavity is closed, the other end of the water inlet pipe is communicated with the inlet water for washing, and at least one water outlet communicated with the pressure equalizing water cavity is formed in the peripheral wall of the water inlet pipe.

Further, the pressure equalizing water cavity has an isosceles triangular cavity, the water inlet pipe is extended vertically to a bottom edge from an apex angle of the pressure equalizing water cavity, the water spray openings are formed at a bottom edge of the pressure equalizing water cavity, and the water outlets are symmetrically distributed in a peripheral wall of the water inlet pipe corresponding to the two waist directions.

Preferably, the water spray openings are arranged at two sides of the water inlet pipe at the bottom edge of the pressure equalizing water cavity, and each water outlet has a strip shape.

The washing machine of the present invention includes an outer drum, wherein the outer drum, a flocculation device, the filter apparatus are sequentially and circularly communicated with one another through a pipeline, wherein
the flocculation device includes a flocculation container communicated with the outer drum and a flocculant dispenser for dispensing flocculants into the flocculation container, and the water is discharged from the outer drum into the flocculation container to be flocculated; and
the filter apparatus includes a filter container and a filter mechanism arranged inside the filter container, wherein the filter container is respectively communicated with the flocculation container and the outer drum, and the flocculated water in the flocculation container is filtered by the filter mechanism and is then discharged into the outer drum to be reused.

Further, the flocculation container is provided with a stirring mechanism for stirring the flocculants so as to accelerate the dissolution of the flocculants and a washing mechanism for scouring and washing the inner wall of the flocculation container.

Further, the washing mechanism includes a water throwing impeller for throwing the water towards the inner wall of the flocculation container and a drive motor for driving the water throwing impeller to rotate.

Further, the stirring mechanism includes a stirring motor installed outside the flocculation container, a stirring shaft extending into the flocculation container and a stirring impeller installed on the stirring shaft.

Further, the drive motor is the stirring motor, the water throwing impeller is coaxially installed on the stirring shaft, a bending direction of the stirring impeller is opposite to the rotation direction of the stirring shaft in a stirring process, and the stirring impeller structure not only can stir the water flow to accelerate the dissolution of the flocculants, but also can prevent the excessively large water flow from scattering flocculates; and a water guide trough is arranged inside the flocculation container and is used to guide the inlet water onto the water throwing impeller. The stirring impeller is installed at the bottom end of the stirring shaft; the water throwing impeller is installed on a position of the stirring shaft adjacent to the stirring motor; when water enters for washing the flocculation container, the stirring motor drives the water throwing impeller at a high speed to rotate; due to the effect of a rotation centrifugal force of the water throwing impeller, the inlet water is thrown onto the inner peripheral wall of the flocculation container at certain speed to wash the flocculation container, and in order to enlarge a water throwing range, the stirring motor is controlled to run at different rotation speed phases.

Further, the water throwing impeller includes a turntable, an annular retaining rib arranged on an upper surface of the turntable and concentric with a center of the turntable, and a plurality of groups of blades circumferentially distributed at an outer side of the annular retaining rib, and a water outlet direction of the water guide trough corresponds to an outer region of the annular retaining rib on the upper surface of the turntable. The outer region of the annular retaining rib is divided by the plurality of groups of blades into a plurality of small areas, and when the water is thrown, the water flow is scattered, so that the water flow is uniformly thrown onto the peripheral wall.

The water circulating treatment method of the washing machine of the present invention is as follows: after the washing is ended, the discharged water is sequentially flocculated by the flocculation device, filtered by the filter apparatus and is then discharged into the outer drum for rinsing; the foregoing water treatment process is circulated until the rinsing is ended; the sewage drain outlet of the flocculation container and the sewage drain outlet of the filter container are opened; and the water in the outer drum is discharged into the flocculation container to carry out the washing, and meanwhile, clean water enters the filter apparatus to wash the filter apparatus.

A main principle of the self-cleaning filter apparatus of the present invention is to utilize the water flow to scour the flocculates and fine particles adhered on the filter screen, thereby finally solving the plastering and blocking problems of the filter screen while the flocculates are filtered. After a flocculation mixture enters the filter container to be filtered by the filter screen, clean water is discharged; if the water flow is slowed down in a water discharging process or after the filter process is ended, the self-cleaning apparatus is started; the tap water enters the spray head and is then obliquely injected onto the filter screen via the water spraying opening so as to scour the filter screen while driving the filter mechanism to rotate, and the filter mechanism rotates to stir the water flow while washing the inner wall of the filter container.

After the above-mentioned technical solution is adopted, compared with the existing art, the present invention has the beneficial effects as follows.

The washing machine of the present invention adopts the flocculation filtering type water circulating and saving equipment, and the whole washing process can be completed by injecting the water at one time, so the water resources are maximally saved, while the washing efficiency is not influenced; by adopting the stirring structure completely opposite to the design of the existing stirring impeller, not only the mixing of the flocculants and the washing sewage is accelerated, but also the flocculates can be prevented from being scattered, and the structure is simple; and both the flocculation device and a filter unit are self-cleaned, so a step for manually clearing the flocculation container and the filter mechanism is omitted, an automation degree is increased, the structure is simple, and energy consumption can be saved.

### Brief Description of the Drawings

Fig. 1 is a structural schematic diagram of a washing machine circulating water-saving filter apparatus described in the present invention.
Fig. 2 is a schematic diagram of Fig. 1 along an A-A direction.
Fig. 3 is a schematic diagram of Fig. 1 along a B-B direction.
Fig. 4 is an assembly structural schematic diagram of another filter apparatus described in the present invention.
Fig. 5 is a schematic diagram showing a structure of a spray head described in the present invention.

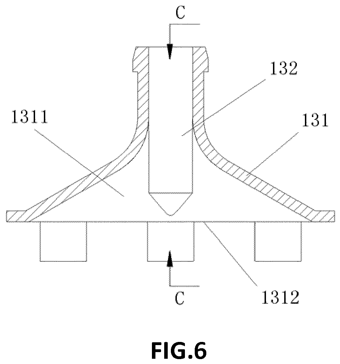

Fig. 6 is a sectional schematic diagram of a spray head described in the present invention.
Fig. 7 is a schematic diagram of Fig. 6 along a C-C direction.
Fig. 8 is a schematic diagram showing a structure of a washing machine described in the present invention.
Fig. 9 is a structural schematic diagram of a filter apparatus and a flocculation device described in the present invention.
Fig. 10 is a connection schematic diagram of circulating water of a washing machine of the present invention.
Fig. 11 is a schematic diagram showing the sectional structure of a flocculation device described in the present invention.
Fig. 12 is a schematic diagram showing the sectional structure of another flocculation device described in the present invention.
Fig. 13 is a structural schematic diagram of a stirring mechanism and a washing mechanism described in the present invention.

### Detailed Description

Specific embodiments of the present invention are further described below in detail in combination with the drawings.

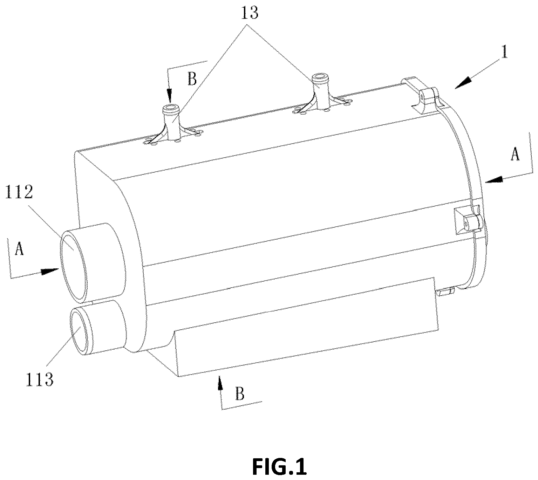

As shown in Fig. 1 to Fig. 4, a filter apparatus 1 for saving circulating water of a washing machine includes a filter container 11 and a filter mechanism 12, wherein the filter mechanism 12 is rotatably arranged inside the filter container 11, and the filter apparatus 1 further includes a self-cleaning mechanism utilizing the inlet water flow to drive the filter mechanism 12 to rotate and to spray and wash the filter mechanism 12.

The filter container 11 is provided with a circulating water inlet 111 of the washing machine, a water outlet 112 for discharging filtered water and a sewage drain outlet 113 for discharging washing waste water. The filter mechanism 12 includes a cylindrical filter frame 121 and a filter screen (the filter screen is not shown in the drawing) arranged on the filter frame, two ends of the filter frame 121 are pivotally connected with the filter container 11, one end of the filter frame is a rotary connector 122, and the other end of the filter frame is axially sealed; and the water outlet 112 is communicated with the rotary connector 122 of the filter mechanism.

The self-cleaning mechanism includes a spray head 13, the spray head 13 is installed on the filter container 11, and a spraying direction acts on the surface of the filter mechanism 12 to drive the filter mechanism 12 to rotate. The spraying direction of the spray head 13 can be arranged to be deviated from the axis of the filter mechanism 12 and to be tilted to a rotating circumferential surface of the filter mechanism and to be close to a direction tangential with the cylindrical filter frame 121, and sprayed water acts on the surface of the filter screen of the filter mechanism, thereby realizing powerful washing.

A path of the water flow during filtering the circulating water by the filter apparatus 1 is as follows: the spray head 13 and the sewage drain outlet 113 are closed; the circulating water enters the filter container 11 through the water inlet 111; and the water filtered by the filter screen is discharged via the rotary connector 122 located at one end of the filter frame 121 and the water outlet 112; and the process for washing the filter apparatus is as follows: the water inlet 111 and the water outlet 112 are closed; clean water enters the spray head 13 to scour the filter mechanism 12; the filter mechanism 12 rotates to stir the water so as to wash the inner wall of the filter container 11; and stains on a surface of the filter screen and the inner wall is scoured out and then is discharged via the sewage drain outlet 113.

### Embodiment I

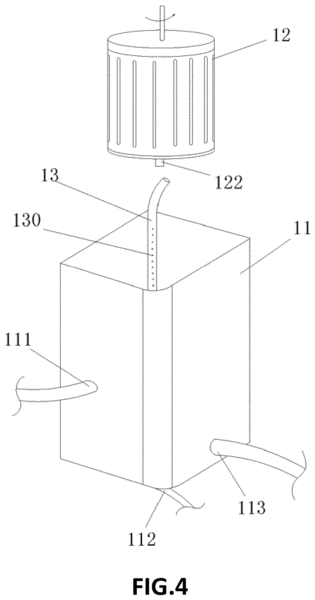

As shown in Fig. 4, the filter mechanism 12 of the present embodiment is vertically arranged inside the filter container 11, a rotary connector 122 is arranged at a bottom end of the filter mechanism 12, and a self-cleaning mechanism is arranged on a side wall of the filter container. This structure effectively utilizes water pressure and gravity to scour the filter screen, so the filter screen is better cleaned.

### Embodiment II

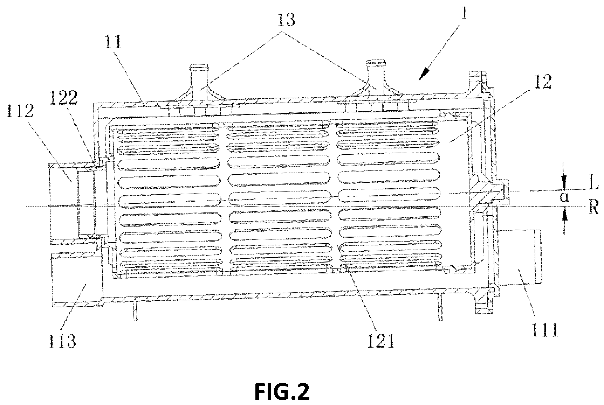

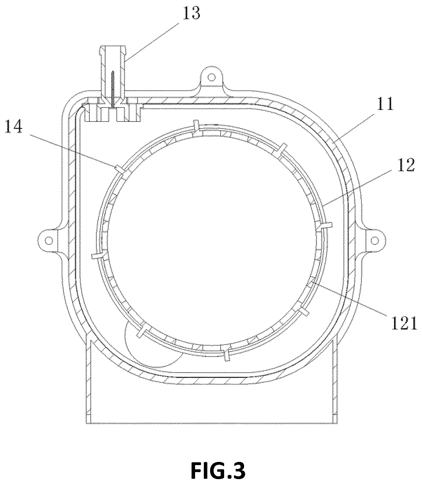

As shown in Fig. 2 and Fig. 3, the present embodiment differs from the embodiment I in that: an inclination angle α between the axial rotation direction L of the filter mechanism 12 and a horizontal plane R satisfies with 0 ≤ α ≤ 30° , preferably 1° ≤ α ≤ 10° , and the most preferred implementation is 1° ≤ α ≤ 3° ; the rotary connector 122 is arranged at a relative lower end of the filter mechanism 12; and by obliquely or transversely arranging the filter mechanism, thereby not only increasing the filter area and the filter speed, but also facilitating the washing of the filter screen.

The structure is realized through the following way: 1. the filter container is horizontally arranged, and the filter mechanism is obliquely arranged; 2. the filter container and the filter mechanism are commonly obliquely arranged and a supporting base is arranged below the filter container.

Compared with the vertical arrangement way of the filter mechanism in the embodiment I, the filter mechanism of the present embodiment has the following advantages: 1. the filter area can be increased; 2. the spray stress is uniform, and the rotation is stable; and 3. flocculation filtering is uniform, the blockage is unlikely to occur, and a washing range is wide.

### Embodiment III

As shown in Fig. 4, the spray head 13 described in the present embodiment has a tubular structure, one end of the spray head is closed, the other end of the spray head is communicated with inlet water for washing, and at least one water spray opening 130 is formed in the peripheral wall of the spray head 13 along an axial direction. The water spray opening 130 has a circular shape, an elliptic shape or a strip shape, and the length of the spray head is required to ensure that the width of the sprayed water flow is sufficient to cover an axial length range of the whole filter screen.

A plurality of tubular spray heads 13 can be arranged to be distributed on the side wall of the filter container 11 and arranged in a direction parallel to the axial rotation direction of the filter mechanism 12.

### Embodiment IV

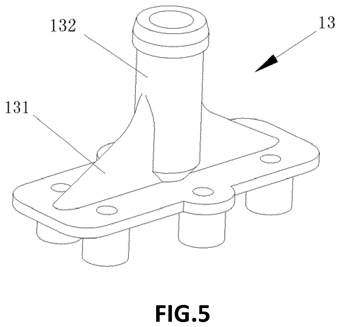

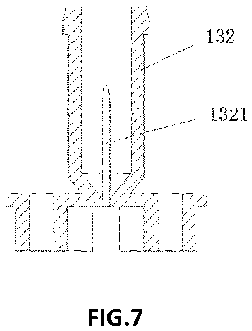

As shown in Fig. 5 and Fig. 7, the spray head 13 described in the present embodiment includes a nozzle 131 and a water inlet pipe 132, the nozzle 131 is provided with a pressure equalizing water cavity 1311 and water spray openings 1312 which are communicated with the pressure equalizing water cavity and spray out the water, the water inlet pipe 132 is extended into the pressure equalizing water cavity 1311, one end of the water inlet pipe extending into the pressure equalizing water cavity 1311 is closed, the other end of the water inlet pipe is communicated with the inlet water for washing, and at least one water outlet 1321 communicated with the pressure equalizing water cavity 1311 is formed in the peripheral wall of the water inlet pipe 132.

Further, the pressure equalizing water cavity 1311 has an isosceles triangular cavity, the water inlet pipe 132 is extended vertically to a bottom edge from an apex angle of the pressure equalizing water cavity 1311, the water spray openings 1312 are formed at a bottom edge of the pressure equalizing water cavity 1311, and the water outlets 1321 are symmetrically distributed on the peripheral wall of the water inlet pipe 132 corresponding to the two waist directions.

Preferably, the water spray openings 1312 are arranged at two sides of the water inlet pipe 132 corresponding to the bottom edge of the pressure equalizing water cavity 1311, and each water outlet 1321 has a strip shape.

At least two spray heads 13 are arranged, the spray heads are arranged above a side of the filter mechanism 12 in a direction parallel to the axial rotation direction of the filter mechanism 12, the pressure and falling gravity of the sprayed water are used to drive the filter frame to rotate and wash the filter screen. In the rotation process of the filter frame, the stain on the surface of the filter screen is removed by means of the rubbing and kneading of the water in the filter container.

### Embodiment V

As shown in Fig. 3, the self-cleaning mechanism described in the present embodiment further includes a paddle 14 arranged on the surface of a filter mechanism, and the paddle 14 is configured to correspond to a spray direction of the spray head 13 so as to transfer a driving force for driving the rotation of the filter mechanism by the water flow.

Further, a plurality of paddles 14 are arranged and distributed along a circumference and an axial direction of the filter frame 121, and the plurality of paddles 14 are configured to correspond to the spray direction of the spray head 13.

### Embodiment VI

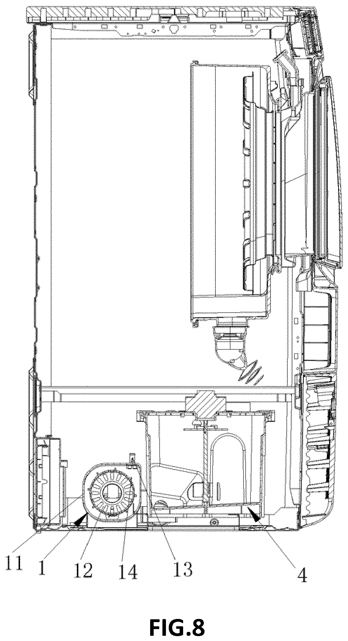

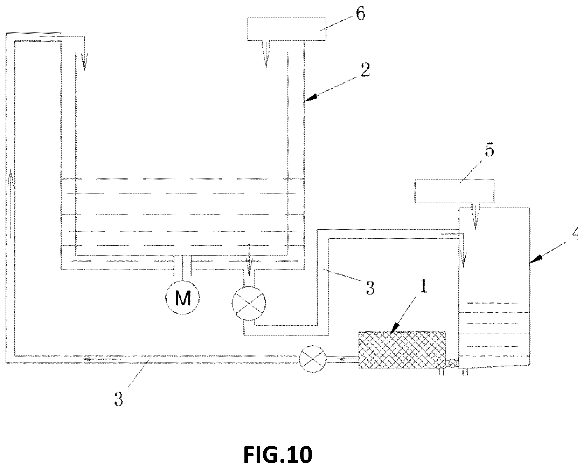

As shown in Fig. 8 to Fig. 10, the washing machine described in the present invention includes but not limited to an impeller washing machine and a drum washing machine; the washing machine includes an outer drum 2, wherein the outer drum 2, a flocculation device 4, a filter apparatus 1 are sequentially and circularly communicated with one another through a pipeline 3.

The flocculation device 4 includes a flocculation container 41 communicated with the outer drum and a flocculant dispenser 5 for dispensing flocculants into the flocculation container 41, and water is discharged from the outer drum 2 into the flocculation container 41 to be flocculated.

The filter apparatus 1 includes a filter container 11 and a filter mechanism 12 arranged inside the filter container 11, wherein the filter container 11 is respectively communicated with the flocculation container 41 and the outer drum 2, and the flocculated water in the flocculation container 41 is filtered by the filter mechanism 12 and then is re-discharged into the outer drum 2 to be reused.

### Embodiment VII

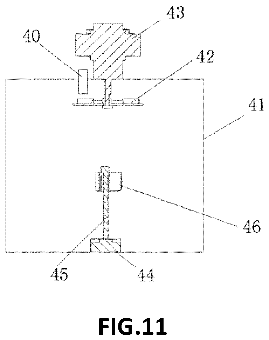

As shown in Fig. 11, the flocculation container 41 in the present embodiment is provided with a stirring mechanism for stirring the flocculants so as to accelerate the dissolution of the flocculants and a washing mechanism for scouring and washing the inner wall of the flocculation container. The washing mechanism includes a water throwing impeller 42 for throwing the water towards the inner wall of the flocculation container 41 and a drive motor 43 for driving the water throwing impeller 42 to rotate; and the stirring mechanism includes a stirring motor 44 installed outside the flocculation container 41, a stirring shaft 45 extending into the flocculation container 41 and a stirring impeller 46 installed on the stirring shaft 45.

The drive motor 43 described in the present embodiment is arranged above the flocculation container, the stirring motor 44 is arranged at the bottom of the flocculation container 41, and the stirring shaft 45 extends upwards into the flocculation container 41. Besides the structure, the stirring motor 44 can also be arranged at a side part of the flocculation container 41, and the stirring shaft 45 extends from the side part into the flocculation container 41, or the stirring motor 44 and the drive motor 43 are arranged above the flocculation container.

### Embodiment VIII

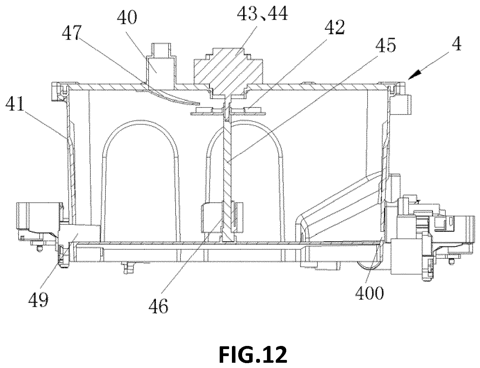

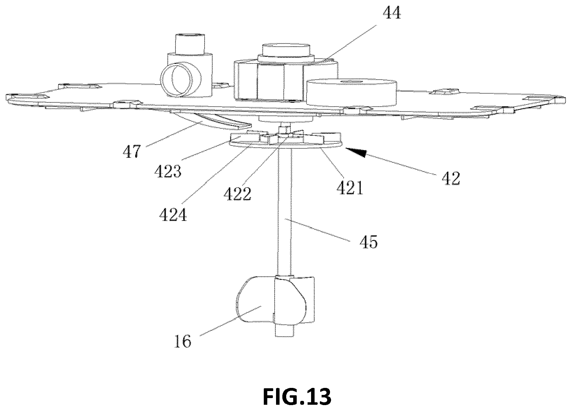

As shown in Fig. 12 and Fig. 13, the present embodiment is further improved on the basis of the embodiment VII. The drive motor 43 and the stirring motor 44 are a same motor, the water throwing impeller 42 is coaxially installed on the stirring shaft 45, the bending direction of the stirring impeller 46 is opposite to the rotation direction of the stirring shaft 45 in the stirring process, and the stirring impeller not only can stir the water flow to accelerate the dissolution of the flocculants, but also can prevent the excessively large water flow from scattering flocculants. A water guide trough 47 is arranged inside the flocculation container 41 and is used to guide the inlet water from the water inlet 40 of the flocculation container to the water throwing impeller 42. The water guide trough 47 is not necessary, as shown in Fig. 11, the water inlet 40 is arranged above the water throwing impeller 42, and the inlet water is directly led to the water throwing impeller 42.

The stirring impeller 46 is installed at the bottom end of the stirring shaft 45; the water throwing impeller 42 is installed at a position of the stirring shaft 45 adjacent to the stirring motor 44; when the water enters for washing the flocculation container 41, the stirring motor 44 drives the water throwing impeller at a high speed to rotate; due to the effect of a rotating centrifugal force of the water throwing impeller 42, the inlet water is thrown onto the inner peripheral wall of the flocculation container 41 to wash the flocculation container; in order to enlarge a water throwing range, the stirring motor 44 is controlled to run at different rotation speeds, and therefore, the inlet water can be thrown onto the inner peripheral wall of the flocculation container 41 at different heights.

The water entering the water inlet 40 for washing may be the post-washing water of the washing machine or may be the clean water, or a three-way valve is installed to respectively receive tap water and the washing water of the washing machine, the post-washing water enters for circulating treatment, and the clean water enters for washing.

### Embodiment IX

As shown in Fig. 13, a water throwing impeller 42 described in the present invention includes a turntable 421, an annular retaining rib 422 arranged on an upper surface of the turntable 421 and concentric with a center of the turntable, and a plurality of groups of blades 423 circumferentially distributed at an outer side of the annular retaining rib, and a water outlet direction of the water guide trough 47 corresponds to an outer region 424 of the annular retaining rib on the upper surface of the turntable. The outer region 424 of the annular retaining rib is divided by the plurality of groups of blades 423 into a plurality of small regions; and when the water is thrown, the water flow is scattered, so the water flow is uniformly thrown onto the peripheral wall.

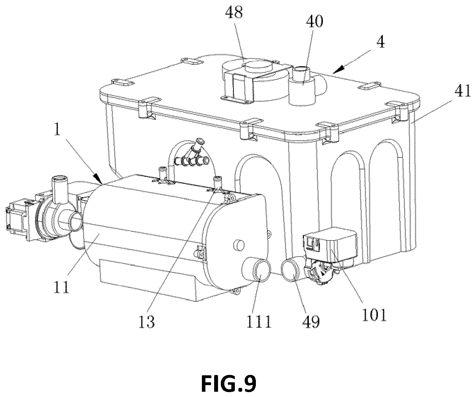

As shown in Fig. 9 and Fig. 12, the flocculation container 41 is provided with a water inlet 40, a flocculant dispensing opening 48, a flocculation water outlet 49 and a sewage drain outlet 400, and the water inlet 40 is communicated with a water drain outlet of an outer drum of the washing machine; a flocculation water inlet 111 of the filter container 11 is communicated with the flocculation water outlet 49; and a control valve 101 is arranged between the flocculation water outlet 49 and the flocculation water inlet 111.

The water circulating treatment method of the washing machine of the present invention is as follows: after the washing is ended, the water is discharged into a circulating water treatment device and sequentially flocculated by a flocculation device and filtered by a filter apparatus; then the water is again discharged into an outer drum for rinsing, the foregoing water treatment process is circulated until the rinsing is ended; the flocculation container sewage drain outlet and the filter container sewage drain outlet are opened; and the water in the outer drum is discharged into the flocculation device to be washed, and meanwhile clean water enters the filter apparatus to wash the filter apparatus.

Further, the washing machine of the present invention further includes an automatic detergent dispensing device 6, wherein the automatic detergent dispensing device 6 belongs to the existing art and is preferably a structure for dispensing the detergents by utilizing the negative pressure of the inlet water; the flocculant dispenser 5 described in the present invention is also an automatic dispensing structure, and the flocculants of corresponding ratio are automatically dispensed for the flocculation process at every time according to the wash water volume and the turbidity of the wash/rinse water; and if the flocculants are in a flaky shape, the existing automatic flaky detergent dispensing structure can be adopted, and if the flocculants are particles or powder, a quantitative dispensing structure of the existing art is adopted.

The implementation solutions in the above embodiments can be further combined or replaced. Moreover, the embodiments are only preferred embodiments for describing the present invention but are not used to limit the concept and scope of the present invention. Various alterations and modifications made by those skilled in the art to the technical solutions of the present invention without departing from the design concept of the present invention falling into the protection scope of the present invention.

## Claims

1. A filter apparatus (1) for recycling water of a washing machine having a self-cleaning function, comprising a filter container (11) and a filter mechanism (12) rotatably arranged inside the filter container (11),
**characterized in that**,
the filter apparatus (1) further comprises a self-cleaning mechanism utilizing an inlet water flow to drive the filter mechanism (12) to rotate and to spray and wash the filter mechanism (12);
the filter mechanism (12) comprises a cylindrical filter frame (121) and a filter screen arranged on the filter frame (121), two ends of the filter frame (121) are pivotally connected with the filter container (11), one end of the filter frame (121) is a rotary connector (122), and the other end of the filter frame (121) is axially sealed; and
the filter container (11) is provided with a circulating water inlet (111), a water outlet (112) for discharging the filtered water and a sewage drain outlet (113) for discharging the washing waste water, and the water outlet (112) is communicated with the rotary connector (122) of the filter mechanism (12);
wherein the self-cleaning mechanism comprises a spray head (13) installed on the filter container (11), a spray direction of sprayed water of the spray head (13) acts on a surface of the filter screen of the filter mechanism (12) to drive the filter mechanism (12) to rotate, wherein the spray direction of the spray head (13) is configured to deviate from the axis of the filter mechanism (12) and tilt to a rotation circumferential surface of the filter mechanism (12) to be close to a direction tangential with the filter frame (121).

2. The filter apparatus (1) for recycling water of a washing machine having a self-cleaning function according to claim 1, wherein an inclination angle α is formed between an axial rotation direction of the filter mechanism (12) and a horizontal plane, the inclination angle α satisfies with 0≤α≤30°; and the rotary connector (122) is arranged at a relatively lower end of the filter mechanism (12).

3. The filter apparatus (1) for recycling water of a washing machine having a self-cleaning function according to claim 1, wherein the spray head (13) has a tubular structure, one end of the spray head (13) is closed, the other end of the spray head (13) is communicated with inlet water for washing, and at least one group of water spray openings (130) is formed in a peripheral wall of the spray head (13) along an axial direction.

4. The filter apparatus (1) for recycling water of a washing machine having a self-cleaning function according to claim 1, wherein the spray head (13) comprises a nozzle (131) and a water inlet pipe (132), the nozzle (131) is provided with a pressure equalizing water cavity (1311) and water spray openings (1312) which are communicated with the pressure equalizing water cavity (1311) and spray out the water, the water inlet pipe (132) is extended into the pressure equalizing water cavity (1311), one end of the water inlet pipe (132) extending into the pressure equalizing water cavity (1311) is closed, the other end of the water inlet pipe (132) is communicated with the inlet water for washing, and at least one water outlet (1321) communicated with the pressure equalizing water cavity (1311) is formed in a peripheral wall of the water inlet pipe (132).

5. The filter apparatus (1) for recycling water of a washing machine having a self-cleaning function according to claim 4, wherein the pressure equalizing water cavity (1311) has an isosceles triangular cavity, the water inlet pipe (132) is extended vertically to a bottom edge from an apex angle of the pressure equalizing water cavity (1311), the water spray openings (1312) are formed at a bottom edge of the pressure equalizing water cavity (1311), and the water outlets (1312) are symmetrically distributed in a peripheral wall of the water inlet pipe (132) corresponding to two waist directions.

6. The filter apparatus (1) for recycling water of a washing machine having a self-cleaning function according to claim 5, wherein the water spray openings (1312) are arranged at two sides of the water inlet pipe (132) at the bottom edge of the pressure equalizing water cavity (1312), and each water outlet (1321) has a strip shape.

7. A washing machine comprising a filter apparatus (1) for recycling water according to any of claims 1-6, comprising an outer drum (2), wherein the outer drum (2), a flocculation device (4), the filter apparatus (1) are sequentially and circularly communicated with one another through a pipeline (3), wherein:
the flocculation device (4) comprises a flocculation container (41) communicated with the outer drum (2) and a flocculant dispenser (5) for dispensing flocculants into the flocculation container (41), and the water is discharged from the outer drum (2) into the flocculation container (41) to be flocculated; and
the filter apparatus (1) comprises a filter container (11) and a filter mechanism (12) arranged inside the filter container (11), wherein the filter container (11) is respectively communicated with the flocculation container (41) and the outer drum (2), and the flocculated water in the flocculation container (41) is filtered by the filter mechanism (12) and is then discharged into the outer drum (2) to be reused.

8. The washing machine according to claim 7, wherein the flocculation container (41) is provided with a stirring mechanism for stirring the flocculants so as to accelerate the dissolution of the flocculants and a washing mechanism for scouring and washing an inner wall of the flocculation container (41).

9. The washing machine according to claim 8, wherein the washing mechanism comprises a water throwing impeller (42) for throwing the water towards the inner wall of the flocculation container (41) and a drive motor (43) for driving the water throwing impeller (42) to rotate.

10. The washing machine according to claim 8 or 9, wherein the stirring mechanism comprises a stirring motor (44) installed outside the flocculation container (41), a stirring shaft (45) extending into the flocculation container (41), and a stirring impeller (46) installed on the stirring shaft (45).

11. The washing machine according to claim 10, wherein the drive motor (43) is the stirring motor (45), the water throwing impeller (42) is coaxially installed on the stirring shaft (45), a bending direction of the stirring impeller (46) is opposite to a rotation direction of the stirring shaft in a stirring process (45), and a water guide trough (47) is arranged inside the flocculation container (41) and is used to guide the inlet water onto the water throwing impeller (42).

12. The washing machine according to claim 11, wherein the water throwing impeller (42) comprises a turntable (421), an annular retaining rib (422) arranged on an upper surface of the turntable (421) and concentric with a center of the turntable (421), and a plurality of groups of blades (423) circumferentially distributed at an outer side of the annular retaining rib (422); and a water outlet direction of the water guide trough (47) corresponds to an outer region (424) of the annular retaining rib (422) on the upper surface of the turntable (421).

## Patentansprüche

1. Filtervorrichtung (1) zum Zurückführen von Wasser einer Waschmaschine mit einer Selbstreinigungsfunktion, umfassend einen Filterbehälter (11) und einen innerhalb des Filterbehälters (11) drehbar angeordneten Filtermechanismus (12),
**dadurch gekennzeichnet, dass**,
die Filtervorrichtung (1) ferner einen Selbstreinigungsmechanismus umfasst, der einen Einlasswasserstrom nutzt, um den Filtermechanismus (12) in Drehung zu versetzen und den Filtermechanismus (12) zu bespritzen und zu waschen;
der Filtermechanismus (12) einen zylindrischen Filterrahmen (121) und ein am Filterrahmen (121) angeordnetes Filtersieb umfasst, wobei zwei Enden des Filterrahmens (121) mit dem Filterbehälter (11) schwenkbar verbunden sind, wobei ein Ende des Filterrahmens (121) ein Drehverbinder (122) ist und das andere Ende des Filterrahmens (121) axial abgedichtet ist; und
der Filterbehälter (11) mit einem Zirkulationswassereinlass (111), einem Wasserauslass (112) zum Abführen des gefilterten Wassers und einem Abwasserablaufauslass (113) zum Abführen des Waschabwassers versehen ist und der Wasserauslass (112) mit dem Drehverbinder (122) des Filtermechanismus (12) in Verbindung steht;
wobei der Selbstreinigungsmechanismus einen Spritzkopf (13) umfasst, der auf dem Filterbehälter (11) installiert ist, wobei eine Spitzrichtung des Spritzwassers des Spitzkopfes (13) auf eine Oberfläche des Filtersiebes des Filtermechanismus (12) einwirkt, um den Filtermechanismus (12) in Drehung zu versetzen, wobei die Spritzrichtung des Spritzkopfes (13) ausgelegt ist, von der Achse des Filtermechanismus (12) abzuweichen und sich zu einer Drehungsumfangsoberfläche des Filtermechanismus (12) zu neigen, um in der Nähe einer Richtung tangential zum Filterrahmen (121) zu sein.

2. Filtervorrichtung (1) zum Zurückführen von Wasser einer Waschmaschine mit einer Selbstreinigungsfunktion nach Anspruch 1, wobei ein Neigungswinkel a zwischen einer axialen Drehrichtung des Filtermechanismus (12) und einer horizontalen Ebene gebildet ist, wobei der Neigungswinkel α 0≤α≤30° erfüllt; und der Drehverbinder (122) an einem relativ unteren Ende des Filtermechanismus (12) angeordnet ist.

3. Filtervorrichtung (1) zum Zurückführen von Wasser einer Waschmaschine mit einer Selbstreinigungsfunktion nach Anspruch 1, wobei der Spritzkopf (13) eine röhrenförmige Struktur aufweist, ein Ende des Spritzkopfes (13) geschlossen ist, das andere Ende des Spritzkopfes (13) mit Einlasswasser zum Waschen in Verbindung steht und zumindest eine Gruppe von Wasserspritzöffnungen (130) in einer peripheren Wand des Spritzkopfes (13) entlang einer axialen Richtung ausgebildet ist.

4. Filtervorrichtung (1) zum Zurückführen von Wasser einer Waschmaschine mit einer Selbstreinigungsfunktion nach Anspruch 1, wobei der Spritzkopf (13) eine Düse (131) und eine Wassereinlassleitung (132) umfasst, die Düse (131) mit einer Druckausgleichswasserkavität (1311) und Wasserspritzöffnungen (1312) versehen ist, die mit der Druckausgleichswasserkavität (1311) in Verbindung stehen und das Wasser ausspritzen, die Wassereinlassleitung (132) in die Druckausgleichswasserkavität (1311) hinein verlängert ist, ein Ende der Wassereinlassleitung (132), das sich in die Druckausgleichswasserkavität (1311) erstreckt, geschlossen ist, das andere Ende der Wassereinlassleitung (132) mit dem Einlasswasser zum Waschen in Verbindung steht, und zumindest ein mit der Druckausgleichswasserkavität (1311) in Verbindung stehender Wasserauslass (1321) in einer peripheren Wand der Wassereinlassleitung (132) ausgebildet ist.

5. Filtervorrichtung (1) zum Zurückführen von Wasser einer Waschmaschine mit einer Selbstreinigungsfunktion nach Anspruch 4, wobei die Druckausgleichswasserkavität (1311) eine gleichschenklige dreieckige Kavität aufweist, die Wassereinlassleitung (132) von einem Scheitelwinkel der Druckausgleichswasserkavität (1311) senkrecht zu einer Bodenkante verlängert ist, die Wasserspritzöffnungen (1312) an einer Bodenkante der Druckausgleichswasserkavität (1311) ausgebildet sind und die Wasserauslässe (1312) in einer peripheren Wand der Wassereinlassleitung (132) entsprechend zwei Mittelrichtungen symmetrisch verteilt sind.

6. Filtervorrichtung (1) zum Zurückführen von Wasser einer Waschmaschine mit einer Selbstreinigungsfunktion nach Anspruch 5, wobei die Wasserspritzöffnungen (1312) an zwei Seiten der Wassereinlassleitung (132) an der Bodenkante der Druckausgleichswasserkavität (1312) angeordnet sind und jeder Wasserauslass (1321) eine Zungenform aufweist.

7. Waschmaschine, umfassend eine Filtervorrichtung (1) zum Zurückführen von Wasser nach einem der Ansprüche 1 bis 6, umfassend eine Außentrommel (2), wobei die Außentrommel (2), eine Flockungseinrichtung (4) und die Filtervorrichtung (1) sequentiell und kreisförmig über eine Rohrleitung (3) miteinander in Verbindung stehen, wobei:
die Flockungseinrichtung (4) einen mit der Außentrommel (2) in Verbindung stehenden Flockungsbehälter (41) und einen Flockungsmittelspender (5) zum Abgeben von Flockungsmitteln in den Flockungsbehälter (41) umfasst, und das Wasser aus der Außentrommel (2) in den Flockungsbehälter (41), in dem die Flockung erfolgen soll, abgeführt wird; und
die Filtervorrichtung (1) einen Filterbehälter (11) und einen Filtermechanismus (12) umfasst, die innerhalb des Filterbehälters (11) angeordnet sind, wobei der Filterbehälter (11) jeweils mit dem Flockungsbehälter (41) und der Außentrommel (2) in Verbindung steht und das geflockte Wasser im Flockungsbehälter (41) durch den Filtermechanismus (12) gefiltert und dann in die Außentrommel (2) abgeführt wird, um wiederverwendet zu werden.

8. Waschmaschine nach Anspruch 7, wobei der Flockungsbehälter (41) mit einem Rührmechanismus zum Rühren der Flockungsmittel, um das Auflösen der Flockungsmittel zu beschleunigen, und einem Waschmechanismus zum Reinigen und Waschen einer Innenwand des Flockungsbehälters (41) versehen ist.

9. Waschmaschine nach Anspruch 8, wobei der Waschmechanismus ein Wasserschleuderschaufelrad (42) zum Schleudern des Wassers zur Innenwand des Flockungsbehälters (41) und einen Antriebsmotor (43) zum drehenden Antreiben des Wasserschleuderschaufelrads (42) umfasst.

10. Waschmaschine nach Anspruch 8 oder 9, wobei der Rührmechanismus einen außerhalb des Flockungsbehälters (41) installierten Rührmotor (44), eine sich in den Flockungsbehälter (41) erstreckende Rührwelle (45) und ein auf der Rührwelle (45) installiertes Rührschaufelrad (46) umfasst.

11. Waschmaschine nach Anspruch 10, wobei der Antriebsmotor (43) der Rührmotor (45) ist, das Wasserschleuderschaufelrad (42) koaxial auf der Rührwelle (45) installiert ist, eine Biegerichtung des Rührschaufelrads (46) zu einer Drehrichtung der Rührwelle in einem Rührprozess (45) entgegengesetzt ist und eine Wasserführungsrinne (47) innerhalb des Flockungsbehälters (41) angeordnet ist und verwendet wird, um das Einlasswasser auf das Wasserschleuderschaufelrad (42) zu führen.

12. Waschmaschine nach Anspruch 11, wobei das Wasserschleuderschaufelrad (42) eine Drehscheibe (421), eine ringförmige Halterippe (422), die auf einer oberen Oberfläche der Drehscheibe (421) und konzentrisch zu einer Mitte des Drehtisches (421) angeordnet ist, und eine Vielzahl von Schaufelgruppen (423) umfasst, die umlaufend an einer Außenseite der ringförmigen Halterippe (422) verteilt sind; und eine Wasserauslassrichtung der Wasserführungsrinne (47) einem äußeren Bereich (424) der ringförmigen Halterippe (422) auf der oberen Oberfläche der Drehscheibe (421) entspricht.

## Revendications

1. Appareil de filtre (1) pour recycler l'eau d'une machine à laver ayant une fonction d'auto-nettoyage, comprenant un contenant de filtre (11) et un mécanisme de filtre (12) agencé, en rotation, à l'intérieur du contenant de filtre (11),
**caractérisé en ce que** :
l'appareil de filtre (1) comprend en outre un mécanisme d'auto-nettoyage utilisant un écoulement d'eau d'entrée pour entraîner le mécanisme de filtre (12) en rotation et pour pulvériser et laver le mécanisme de filtre (12) ;
le mécanisme de filtre (12) comprend un bâti de filtre cylindrique (121) et un tamis de filtre agencé sur le bâti de filtre (121), deux extrémités du bâti de filtre (121) sont raccordées, de manière pivotante, avec le contenant de filtre (11), une extrémité du bâti de filtre (121) est un connecteur rotatif (122), et l'autre extrémité du bâti de filtre (121) est axialement scellée ; et
le contenant de filtre (11) est prévu avec une entrée d'eau circulante (111), une sortie d'eau (112) pour décharger l'eau filtrée et une sortie d'évacuation d'eau usée (113) pour décharger l'eau usée de lavage, et la sortie d'eau (112) communique avec le connecteur rotatif (122) du mécanisme de filtre (12) ;
dans lequel le mécanisme d'auto-nettoyage comprend une tête de pulvérisation (13) installée sur le contenant de filtre (11), une direction de pulvérisation d'eau pulvérisée de la tête de pulvérisation (13) agit sur une surface du tamis de filtre du mécanisme de filtre (12) pour entraîner le mécanisme de filtre (12) en rotation, dans lequel la direction de pulvérisation de la tête de pulvérisation (13) est configurée pour dévier de l'axe du mécanisme de filtre (12) et s'incliner par rapport à une surface circonférentielle de rotation du mécanisme de filtre (12) pour être à proximité d'une direction tangentielle avec le bâti de filtre (121).

2. Appareil de filtre (1) pour recycler l'eau d'une machine à laver ayant une fonction d'auto-nettoyage selon la revendication 1, dans lequel l'angle d'inclinaison α est formé entre une direction de rotation axiale du mécanisme de filtre (12) et un plan horizontal, l'angle d'inclinaison α satisfait 0 ≤ α ≤ 30° ; et le connecteur rotatif (122) est agencé au niveau d'une extrémité relativement inférieure du mécanisme de filtre (12).

3. Appareil de filtre (1) pour recycler l'eau d'une machine à laver ayant une fonction d'auto-nettoyage selon la revendication 1, dans lequel la tête de pulvérisation (13) a une structure tubulaire, une extrémité de la tête de pulvérisation (13) est fermée, l'autre extrémité de la tête de pulvérisation (13) communique avec l'entrée d'eau pour le lavage, et au moins un groupe d'ouvertures de pulvérisation d'eau (130) est formé dans une paroi périphérique de la tête de pulvérisation (13) le long d'une direction axiale.

4. Appareil de filtre (1) pour recycler l'eau d'une machine à laver ayant une fonction d'auto-nettoyage selon la revendication 1, dans lequel la tête de pulvérisation (13) comprend une buse (131) et un tuyau d'entrée d'eau (132), la buse (131) est prévue avec une cavité d'eau d'égalisation de pression (1311) et les ouvertures de pulvérisation d'eau (1312) qui communiquent avec la cavité d'eau d'égalisation de pression (1311) et pulvérisent l'eau, le tuyau d'entrée d'eau (132) est étendu dans la cavité d'eau d'égalisation de pression (1311), une extrémité du tuyau d'entrée d'eau (132) s'étendant dans la cavité d'eau d'égalisation de pression (1311) est fermée, l'autre extrémité du tuyau d'entrée d'eau (132) communique avec l'eau d'entrée pour le lavage, et au moins une sortie d'eau (1321) communiquant avec la cavité d'eau d'égalisation de pression (1311) est formée dans une paroi périphérique du tuyau d'entrée d'eau (132).

5. Appareil de filtre (1) pour recycler l'eau d'une machine à laver ayant une fonction d'auto-nettoyage selon la revendication 4, dans lequel la cavité d'eau d'égalisation de pression (1311) a une cavité en forme de triangle isocèle, le tuyau d'entrée d'eau (132) est étendu verticalement jusqu'à un bord inférieur à partir d'un angle de sommet de la cavité d'eau d'égalisation de pression (1311), les ouvertures de pulvérisation d'eau (1312) sont formées au niveau d'un bord inférieur de la cavité d'eau d'égalisation de pression (1311), et les sorties d'eau (1312) sont réparties de manière symétrique dans une paroi périphérique du tuyau d'entrée d'eau (132) correspondant à deux directions d'étranglement.

6. Appareil de filtre (1) pour recycler l'eau d'une machine à laver ayant une fonction d'auto-nettoyage selon la revendication 5, dans lequel les ouvertures de pulvérisation d'eau (1312) sont agencées au niveau de deux côtés d'un tuyau d'entrée d'eau (132) au niveau du bord inférieur de la cavité d'eau d'égalisation de pression (1312), et chaque sortie d'eau (1321) a une forme de bande.

7. Machine à laver comprenant un appareil de filtre (1) pour recycler l'eau selon l'une quelconque des revendications 1 à 6, comprenant un tambour externe (2), dans laquelle le tambour externe (2), un dispositif de floculation (4), l'appareil de filtre (1) communiquent de manière séquentielle et circulaire entre eux par le biais d'une conduite (3), dans laquelle :
le dispositif de floculation (4) comprend un récipient de floculation (41) communiquant avec le tambour externe (2) et un distributeur de floculant (5) pour distribuer les floculants dans le récipient de floculation (41), et l'eau est déchargée du tambour externe (2) dans le récipient de floculation (41) pour être floculée ; et
l'appareil de filtre (1) comprend un contenant de filtre (11) et un mécanisme de filtre (12) agencé à l'intérieur du contenant de filtre (11), où le contenant de filtre (11) communique respectivement avec le récipient de floculation (41) et le tambour externe (2), et l'eau floculée dans le récipient de floculation (41) est filtrée avec le mécanisme de filtre (12) et est ensuite déchargée dans le tambour externe (2) pour être réutilisée.

8. Machine à laver selon la revendication 7, dans laquelle le récipient de floculation (41) est prévu avec un mécanisme d'agitation pour agiter les floculants afin d'accélérer la dissolution des floculants et un mécanisme de lavage pour frotter et laver une paroi interne du récipient de floculation (41).

9. Machine à laver selon la revendication 8, dans laquelle le mécanisme de lavage comprend une roue de jet d'eau (42) pour expulser l'eau vers la paroi interne du récipient de floculation (41) et un moteur d'entraînement (43) pour entraîner la roue de jet d'eau (42) en rotation.

10. Machine à laver selon la revendication 8 ou 9, dans laquelle le mécanisme d'agitation comprend un moteur d'agitation (44) installé à l'extérieur du récipient de floculation (41), un arbre d'agitation (45) s'étendant dans le récipient de floculation (41) et une roue d'agitation (46) installée sur l'arbre d'agitation (45).

11. Machine à laver selon la revendication 10, dans laquelle le moteur d'entraînement (43) est le moteur d'agitation (45), la roue de jet d'eau (42) est installée, de manière coaxiale sur l'arbre d'agitation (45), une direction de flexion de la roue d'agitation (46) est opposée à une direction de rotation de l'arbre d'agitation dans un processus d'agitation (45), et une goulotte de guidage d'eau (47) est agencée à l'intérieur du récipient de floculation (41) et est utilisée pour guider l'eau d'entrée sur la roue de jet d'eau (42).

12. Machine à laver selon la revendication 11, dans laquelle la roue de jet d'eau (42) comprend un plateau tournant (421), une nervure de retenue annulaire (422) agencée sur une surface supérieure du plateau tournant (421) et concentrique avec un centre du plateau tournant (421), et une pluralité de groupes de pales (423) répartis, de manière circonférentielle, au niveau d'un côté externe de la nervure de retenue annulaire (422) ; et une direction de sortie d'eau de la goulotte de guidage d'eau (47) correspond à une région externe (424) de la nervure de retenue annulaire (422) sur la surface supérieure du plateau tournant (421).
